(19) Europäisches Patentamt
European Patent Office
Office européen des brevets

(11) EP 3 102 736 B1

(12) EUROPEAN PATENT SPECIFICATION

(45) Date of publication and mention of the grant of the patent:
**22.11.2017 Bulletin 2017/47**

(21) Application number: **15706493.2**

(22) Date of filing: **06.02.2015**

(51) Int Cl.:
***D21H 17/16*** *(2006.01)* ***D21H 17/17*** *(2006.01)*
***D21H 17/24*** *(2006.01)* ***D21H 17/31*** *(2006.01)*
***D21H 21/16*** *(2006.01)*

(86) International application number:
**PCT/FI2015/050076**

(87) International publication number:
**WO 2015/118228 (13.08.2015 Gazette 2015/32)**

# (54) A STABILIZED SIZING FORMULATION

STABILISIERTE SCHLICHTEFORMULIERUNG

FORMULATION D'ENCOLLAGE STABILISÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.02.2014 FI 20145118**

(43) Date of publication of application:
**14.12.2016 Bulletin 2016/50**

(73) Proprietor: **Kemira OYJ**
**00180 Helsinki (FI)**

(72) Inventors:
- **STRENGELL, Reetta**
**FI-02230 Espoo (FI)**
- **LINDFORS, Juha**
**FI-02170 Espoo (FI)**
- **HYVÄRINEN, Sari**
**FI-02044 Vtt (FI)**
- **VUOTI, Sauli**
**FI-02044 Vtt (FI)**

(74) Representative: **Berggren Oy, Helsinki & Oulu**
**P.O. Box 16**
**Eteläinen Rautatiekatu 10A**
**00101 Helsinki (FI)**

(56) References cited:
**WO-A1-2008/145828**
**WO-A1-2011/073522**
**WO-A2-2009/010483**
**US-A- 4 606 773**
**US-A1- 2003 209 336**
**US-A1- 2009 188 054**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 102 736 B1

## Description

### Field of the Invention

The present invention relates to papermaking, and especially to a stabilized sizing formulation to be used in the paper manufacture and to a method for sizing paper.

### Background

Sizing makes the native fiber network hydrophobic and thus prevents or reduces the penetration of water or other aqueous liquids into the paper. Sizing prevents the spreading and strike through of ink or printing colors. Papermaking fibers have a strong tendency to interact with water. This property is important for the development of strong interfiber hydrogen bonds, especially during drying, and is also the reason why paper loses its strength when rewetted. A high absorbency is important for certain paper grades such as toweling and tissue. Also corrugated medium paper must be able to absorb to a certain degree to convert properly in the corrugating process. On the other hand such properties are disadvantageous for many paper grades, e.g., liquid packaging, top layer of corrugated board, writing and printing papers, and most specialty papers. The water and liquid absorbency can be reduced by the addition of sizing agents to the paper stock and/or by their application to the paper surface.

Since the 1950s various forms of rosin size in the form of paste, dispersed, fortified formulations, alkyl ketene dimer (AKD) size, alkenyl succinic anhydride (ASA) size, and polymers mainly based on styrene acrylate and styrene maleinate sometimes called polymeric sizing agents (PSAs), have come onto the market. Today, beside starch for paper strength improvement and polymer binders for paper coating, sizing agents are the most important quality-improving additives in the paper manufacturing.

When applied in papermaking an emulsion or a dispersion of the sizing agent is prepared. Among other uses in papermaking, cationized starch is commonly used also as a stabilizing agent of the sizing agent emulsions or dispersions.

Pure starch is a white, tasteless and odorless powder that is insoluble in cold water or alcohol. It consists of two types of molecules: the linear and helical amylose:

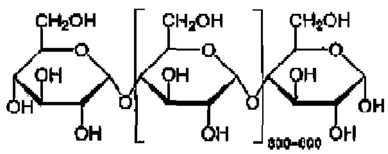

(1)

and the branched amylopectin:

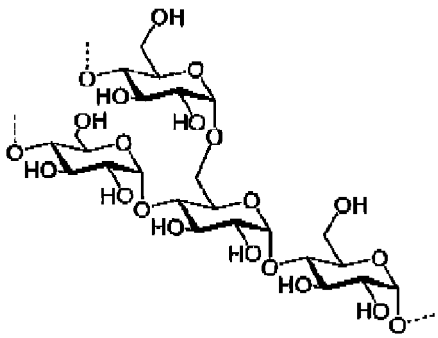

(2)

Depending on the plant origin of starch, it generally contains from 20% to 25% amylose and from 75% to 80% amylopectin by weight.

Galactomannans are polysaccharides consisting of a mannose backbone with galactose side groups. A segment of galactomannan showing mannose backbone with a branching galactose unit on the top is illustrated below.

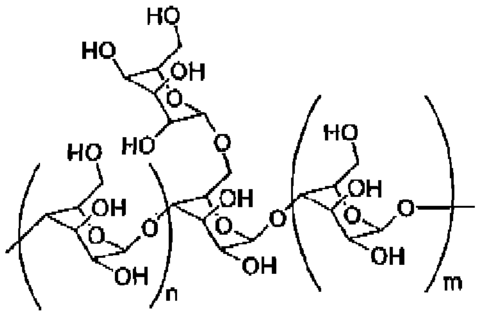

(3)

Non-ionic galactomannans such as guar gum have been used in emulsions of ASA sizing agent under controlled conditions. These ASA - guar gum emulsions were subjected to various treatments using a deposition rotor. Typically, the more guar gum is used in the emulsion, the more stable is the emulsion. The use of a further surfactant results in even less deposition, and a smaller average particle size of the emulsion.

In US4606773 an emulsion of alkenyl succinic anhydride (ASA) type of paper sizing agent is prepared using a cationic water-soluble polymer and a cationic starch as emulsifiers. In the disclosed method a water-soluble polymer is used as an emulsification aid. A cationically modified polymer having a molecular weight ranging between 20,000-750,000 is used in conjunction with water-soluble cationic starch, wherein the cationic starch to polymer weight ratio is between 75:25 to 25:75.

WO2008/145828 A1 discloses a xylan ester which may be present in a sizing composition. The esters are produced by reacting xylan with a short chained aliphatic carboxylic acid, such as formic, acetic, priopionic or butyric acid.

In the application of cationized starch for ASA stabilization typically a ratio from 1:1 to 4:1 of starch to ASA is used. Furthermore, starch used is also an important source of nutrition. Therefore, to develop more sustainable solutions for the future it would be highly advantageous to develop and use sizing agents comprising non-food based chemicals as emulsifiers in papermaking.

**Summary of the invention**

The object of the present invention is to provide a stable sizing agent formulation for use in paper and paper product manufacture.

A further object of the present invention is to provide a sizing agent formulation the components of which are of non-food origin thus rendering the sizing agent formulation more sustainable in use.

Yet, a further object of the present invention is to provide a more efficient stabilizing agent for use in sizing formulations.

The present invention provides modified derivatives of non-food, anti-nutritional polysaccharides. The modified non-food polysaccharides are successfully used as stabilizers in sizing formulations, and they are especially suitable for paper and paper product manufacture according to the present invention.

Typically starch has been used as stabilizer for the sizing agents. The present invention provides an attractive, more sustainable alternative for starch which alternative is of non-food origin. For technical purposes environmentally benign biopolymers should be used instead of nutritionally important starch.

One advantage in replacing starch with a non-food anti-nutritional polysaccharide is that more starch is rendered available for nutritional purposes.

Another advantage of the method and product of the present invention is that the concentration of the non-food polysaccharides required to provide the necessary stabilizing effect for the sizing formulation is remarkably lowered compared to other stabilizers thus providing an enhanced stabilization effect. Therefore, considerably less polysaccharides according to the present Invention are needed compared, for example, to the amount of starch required. This may further lower the preparation cost of the sizing agent emulsions, and eventually also the cost for sizing agent formulation.

Yet, another advantage in providing the required stabilizing effect by using less stabilizing agent is that the amount of chemicals needed in subsequent processing may be decreased, as well. When starch is used as a stabilizer it is not fully retained in the paper. Unretained material will be contained in the eluents of the papermaking process. Therefore, the use of starch will increase the organic load of the wastewater in a papermaking process. When modified non-food polysaccharides according to the present invention, such as xylan or arabinogalactan, are used the amount of stabilizer needed is considerably lower lowering the organic load in the wastewaters, as well.

The present invention provides a method for preparation of modified non-food polysaccharides providing an enhanced stabilizing effect in sizing formulation.

The present invention further provides a stabilized sizing formulation and a method for preparation thereof. The

use of the formulation is depicted, as well.

## Brief description of the figures

Figure 1 shows the Cobb60 hydrophobicity results measured from paper sheets wherein GTAC cationized xylan is used for stabilizing an ASA sizing agent formulation.

Figure 2 shows the Cobb60 hydrophobicity results measured from paper sheets wherein GTAC cationized arabinogalactan is used for stabilizing an ASA sizing agent formulation.

## Detailed description of the present invention

By non-food polysaccharides is meant polysaccharides which fail to provide a source for a nutritional diet. Unlike starch, non-food polysaccharides cannot be used for nutritional purposes.

The non-food polysaccharide include indigestible non-starch polysaccharides (NSP) consisting of long chains of repeating glucose units. Unlike in starches, the glucose units in non-starch polysaccharides are joined by beta-acetal linkage bonds. The beta-acetal linkage cannot be split by the enzymes in the digestive tract. The non-starch polysaccharides include, for example, celluloses, hemicelluloses, gums, pectins, xylans, mannans, glucans and mucilages. Typical NSPs found in wheat are arabinoxylans and cellulose. In the present invention, preferably, the non-food polysaccharides are selected from xylan, arabinogalactan or mixtures thereof.

In one embodiment the stabilized sizing formulation of the present invention comprises a sizing agent and a modified non-food polysaccharide which comprises xylan or arabinogalactan or mixtures thereof.

Xylan (CAS number: 9014-63-5) is one example of highly complex polysaccharides that is found in plant cell wall and in certain algae. Xylan is a polysaccharide made from units of xylose which is a pentose sugar. Xylans are almost as ubiquitous as cellulose in plant cell walls and contain predominantly β-D-xylose units linked as in cellulose. The formula of a xylan may be presented as follows:

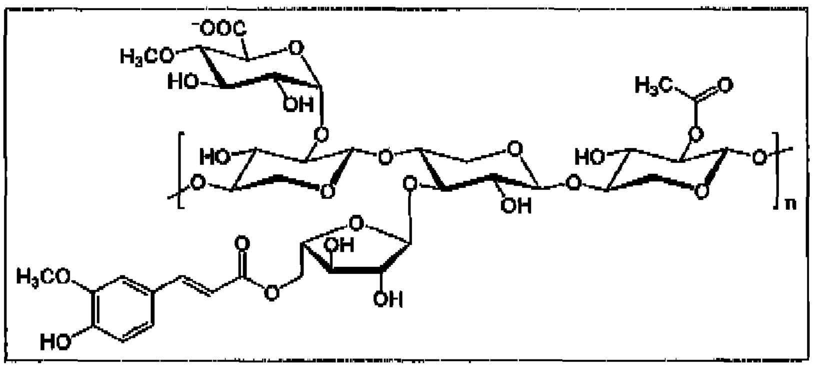

**(4)**

wherein n is the number of xylose units.

Another specific example of a non-food polysaccharide is arabinogalactan. It is a biopolymer consisting of arabinose and galactose monosaccharides. Two classes of arabinogalactans are found in nature: plant arabinogalactan and microbial arabinogalactan. In plants, it is a major component of many gums, including gum arabic and gum ghatti. Both the arabinose and galactose exist solely in the furanose configuration. An example of a structure of an arabinogalactan is presented by the following formula (5):

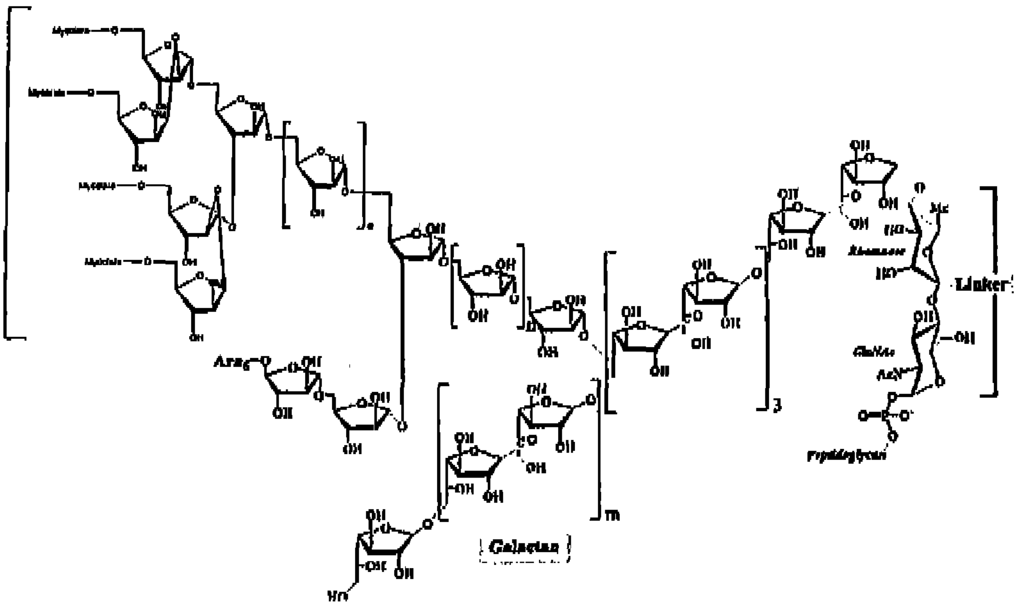

An arabinogalactan from wood of the larch tree (Larix laricina) is composed of d-galactose and I-arabinose in a 6:1 molar ratio accompanied by small amounts of d-glucuronic acid. Arabinogalactans are found in a variety of plants but are more abundant in Larix occidentalis (western larch).

In one aspect of the present invention a method for preparation of a modified non-food polysaccharide is provided. The properties of non-food polysaccharides may be modified by functionalizing or derivatizing with varying chemicals. The properties of the modified polysaccharides, such as hydrophobicity and/or plasticization, may be enhanced further by modifying them with esters and/or ether groups into the hemicellulose backbone. Depending on the quality of the substituents, the degree of substitutions, type of backbone, molecular weight of the remaining backbone, solubility and thermal properties can be changed remarkably and the dispersion properties enhanced even further.

The disclosed method comprises modifying the non-food polysaccharide by functionalization using a functionalizing agent which is capable of charging the non-food polysaccharide. The non-food polysaccharides may be modified to exhibit cationic or anionic properties. There are several methods available for carrying out this charging.

The non-food polysaccharide of the present invention is charged by rendering it cationic with a suitable cationization agent. This method for cationically charging the non-food polysaccharide comprises the steps of

i. providing a mixture of charging reagent, water and a catalytic amount of base, and stirring said mixture thoroughly at a constant temperature above the room temperature, and

ii. introducing the non-food polysaccharide and small amount of water to the mixture obtained from step i, and stirring the resulting mixture for several hours at a constant temperature, and subsequently

iii. washing and filtering the resulting charged non-food polysaccharide before recovery.

In a preferred reaction method according to the present invention charged non-food polysaccharides are prepared by reacting the non-food polysaccharide with a charged amino reagent. The charged amino reagent, water and a catalytic amount of base are mixed thoroughly and subjected to a constant temperature which is above room temperature. The non-food polysaccharide and a small amount of water, preferably less than 10% of the molar amount of the amino reagent, are introduced into this mixture. The mixture is stirred, preferably for at least 12 h, at the constant temperature. The resulting product is washed, preferably with alcohol and water, and filtered.

In one embodiment the non-food polysaccharide comprises xylan or arabinogalactan or mixtures thereof.

Preferably, the base is metal hydroxide, more preferably NaOH or KOH, most preferably NaOH. The catalytic amount of the base is preferably from 0.01 to 50%, more preferably from 0.01 to 10%, of the molar amount of non-food polysaccharide. The charged amino reagent is preferably a cationically charged amino reagent and more preferably selected from the group of 2,3-epoxypro-pyltrimethylammonium chloride (EPTA), 2-hydroxypropyltrimethylammonium chloride (HPMA), glycidyltriethylammonium chloride, glycidyltriethylammonium bromide or glycidyltriethylammonium methylsulfate, glycidyltripropylammonium chloride, glycidyltripropylammonium bromide, glycidyltripropylammonium methylsulfate and glycidyltrimethylammonium chloride (GTAC). Most preferably, the cationic amino reagent is glycidyltrimethylammonium chloride (GTAC). Preferably, the temperature is in steps i and ii from 35 to 50 °C, more preferably from 40 to 50 °C, such as about 45 °C.

In one embodiment of the present invention the resulting cationic non-food polysaccharide derivative preferably contains quaternary ammonium groups with a high degree of substitution. These cationic non-food polysaccharide derivatives may be prepared by reaction of the polysaccharide, preferably with glycidyltrimethylammonium chloride (GTAC), in varying reaction media. In aqueous solutions of GTAC along with conventional hydrolysis of epoxy groups, their interaction with chloride ions also takes place. This results in formation of hydroxyl ions which accelerate both the hydrolysis of GTAC epoxy groups and can act as the internal catalyst in the reaction of GTAC with the polysaccharide. In this way cationic polysaccharides with a high degree of substitution may be obtained. The autocatalytic reaction of GTAC with the non-food polysaccharide proceeds more rapidly at higher temperatures, but with lower reaction efficiency. Both in the absence of the external catalyst and in the case when sodium alkali is used as a catalyst the reaction of polysaccharide with GTAC proceeds only when a particular quantity of free water is present in the system. When a base, preferably NaOH, is used as catalyst the reaction efficiency is about 90%. The yield of the non-food polysaccharide cationization reaction decreases when the quantity of free water is twice or thrice higher than required for the non-food polysaccharide modification to begin.

The preferred non-food polysaccharides to be cationized in the present invention are xylan or arabinogalactan or mixtures thereof.

The charging agents may be selected from commercially available reagents.

In one embodiment xylan is cationized using glycidyltrimethylammoniumchloride (GTAC) as charging agent. GTAC, water and a catalytic amount of NaOH are mixed thoroughly, and the mixture is pre-warmed at 45 °C. Xylan and a small additional amount of water, preferably less than 10% of the molar amount of the amino reagent, are then added to the mixture, and the mixture is stirred thoroughly for about 16 hours at the constant temperature i.e. 45 °C. The mixture is subsequently washed with alcohol, preferably ethanol, water and filtered.

The reaction mechanism is the following:

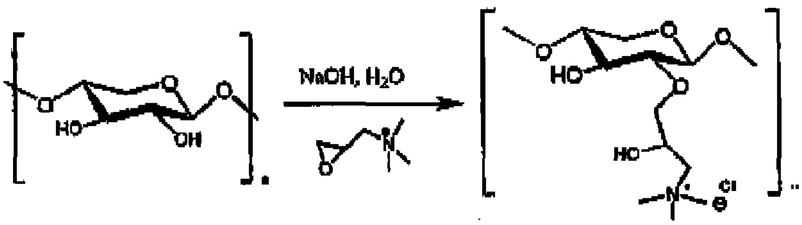


(7)

The degree of substitution (DS) for the cationized samples may be measured by analyzing the amount of nitrogen by the well-known Kjeldahl method and calculating the DS from the total amount of nitrogen in the samples using the following formula:

$$DS = \frac{132 \times N}{1400 - (151.5 \times N)} \quad (8)$$

where N is nitrogen amount estimated by Kjeldahl method (%), 132 is the molecular weight of repeating unit and 151.5 is the molecular weight of GTAC.

The degree of substitution (DS) is dependent on the reagents, reagent ratios and reaction conditions. The following table 1 depicts the influence of these parameters to DS in some of the tested cationic xylan samples which are made at 45 °C and wherein the reaction time has been 16 h.

Table 1.

| D.S. | GTAC (mol) | H2O (mol) | NaOH (mol) |
|---|---|---|---|
| 0.03 | 0.5 | 5.0 | 0.076 |
| 0.15 | 1.0 | 5.0 | 0.076 |
| 0.25 | 0.5 | 2.5 | 0.038 |
| 0.98 | 3.0 | 15.0 | 0.300 |

In another embodiment arabinogalactan is cationized using glycidyltrimethylammoniumchloride (GTAC) as the cationic charging agent. GTAC, water and a catalytic amount of NaOH of the amount of GTAC used, are mixed thoroughly, and the mixture is prewarmed at 45 °C. Arabinogalactan and a small additional amount of water, preferably less than 20 mol-%, more preferably less than 10 mol-%, are then added to the mixture, and the mixture is stirred thoroughly for about 16 hours at the constant temperature i.e. 45°C. The mixture is then washed with alcohol, preferably ethanol, water and filtered.

The following table 2 depicts the influence of the reagents and reagent ratios to DS in some of the tested cationic arabinogalactan samples.

Table 2.

| D.S. | GTAC (mol) | H2O (mol) | NaOH (mol) |
|---|---|---|---|
| 0.1 | 1.0 | 0.1 | 0.076 |
| 0.25 | 0.5 | 5.0 | 0.076 |
| 0.34 | 0.75 | 5.0 | 0.076 |
| 0.5 | 1.25 | 5.0 | 0.076 |
| 0.75 | 1.0 | 5.0 | 0.076 |
| 0.94 | 2.0 | 10.0 | 0.150 |

The small additional amount of the water is preferably less than 20%, preferably from 5 to 20%, more preferably from 6 to15% or even 6 to 10%.

The degree of substitution of the modified non-food polysaccharide is preferably from 0.03 to 1.5. The degree of substitution in the GTAC charged xylan is preferably from 0.1 to 1.5, more preferably from 0.1 to 1.1 whereas for GTAC charged arabinogalactan it is preferably from 0.75 to 1.5, more preferably from 0.8 to 1.2.

In another aspect of the present invention a stabilized sizing formulation is provided, comprising a sizing agent, and a cationically charged non-food polysaccharide.

The sizing agent of the formulation is preferably alkyl ketene dimer (AKD), alkenyl succinic anhydride (ASA) or mixtures thereof. The amount of ASA in the formulation is from 1 to 3% by weight, preferably from 1 to 2% by weight, most preferably from 1.2 to 1.3% by weight, such as from 1.24 to 1.26% by weight, of the formulation.

In one embodiment the stabilized sizing formulation comprises ASA or AKD, and a cationized xylan. The polysaccharide is most advantageously cationized using GTAC, and preferably the degree of substitution is less than 1.1, more preferably from 0.03 to 0.98.

In another preferred embodiment the stabilized sizing formulation comprises ASA or AKD, and a cationized arabinogalactan. The polysaccharide is most advantageously cationized using GTAC, and preferably the degree of substitution is from 0.75 to 1.1, more preferably from 0.9 to 1.0.

The amount of charged functionalized non-food polysaccharide to the sizing agent in the stabilized sizing formulation is from 0.05:1 to 1:1, preferably from 0.07:1 to 0.5:1, more preferably from 0.09:1 to 0.11:1. These amounts are considerably less than the corresponding amounts of starch required and tested as reference. The amount of starch required to provide the same stabilizing effect was about 20 times more.

The stabilized sizing formulation according to the present invention is preferably in a form of a dispersion, more preferably an emulsion.

In one embodiment the amount of ASA in the sizing emulsion formulation is 1.25% by weight and the amount of xylen cationically modified with GTAC to ASA is about 0.1:1.

In another embodiment the amount of ASA in the sizing emulsion formulation is 1.25% and the amount of arabinogalactan cationically modified with GTAC to ASA is 0.1:1.

The formulation according to the present invention may further contain typically used, or readily commercially available, emulsifiers, retention aids, such as e.g. Fennopol K3400 R, or promoters, such as PAC. The charging of the noon-food polysaccharides has a clearly enhanced effect on retention.

The dosage of the sizing agent formulation according to the present invention to the pulp is preferably from 0.5 to 3 kg/t when the formulation comprises the charged non-food polysaccharide stabilizing agent. It was found that the required amount of arabinogalactan based sizing formulation was slightly more, preferably about 30% more, than when using xylan based formulation.

In a further aspect of the present invention a method for preparing the stabilized sizing formulation is provided. The sizing agent and the charged non-food polysaccharide are brought into contact within an aqueous solution whereby a dispersion is formed.

In one embodiment the cationic noon-food polysaccharide is first dissolved into water or an aqueous solvent whereto the sizing agent is subsequently introduced. The mixture is then homogenized. The sizing agent is preferably mixed with an aqueous solution of the charged non-food polysaccharide to ensure efficient mixing.

Preferably, the sizing formulation is formed by homogenizing the aqueous mixture. The homogenization may be carried out in high pressure, preferably at a pressure from 140 to 160 bar.

In a yet further aspect of the present invention use of the stabilized sizing formulation as depicted above is provided for sizing paper and paper products. A preferred dosage amount of the sizing formulation into pulp furnish is from 0.5 to 3 kg/t.

The stability of the sizing formulation may be evaluated by preparing hand sheets and measuring the Cobb value of the paper product resulting from a manufacturing process utilising the sizing formulation. The Cobb60 value determines the water absorptiveness of sized paper according to ISO 535:1991(E) standard.

Using the stabilized sizing formulation according to the present invention Cobb60 values equal to the values obtained when using starch as stabilizer are obtained. In certain formulations the Cobb60 value is even lower than that measured from a starch based formulation. Thus, it is possible to replace starch stabilized sizing formulations with formulations comprising non-food polysaccharides without sacrificing the stabilizing ability or the quality of the final paper product.

It is further noted that the amount of charged modified non-food polysaccharide may be clearly less, possibly 1/10 or even 1/20, than the amount of starch needed, to reach equal results. The amount of the stabilizing agent in the emulsions of sizing formulations could be significantly lower, such as 1/20 of that compared to starch as a stabilizer. This has a particular effect on the effluent water chemical load and to the post processing and recycling of the effluent.

It is also possible to manufacture modified non-food polysaccharides having both cationic and anionic functionalities. The experimental results in terms of Cobb60 values, however, revealed that the performance of such formulations is inferior to merely cationically modified non-food polysaccharides.

Hereafter, the present invention is described in more detail and specifically with reference to the examples, which are not intended to limit the present invention.

## Examples

### Example 1

Five samples with varying degree of substitution are prepared from the commercially available non-food polysaccharide, xylan.

GTAC (Raisacat, Ciba-Basf), H20 and a catalytic amount of NaOH are mixed thoroughly in a reaction flask, and the flask was then instantly added to a pre-warmed water bath at 45 °C. Xylan and a small additional amount of water are then added to the mixture, and the mixture is stirred thoroughly for 16 hours at constant temperature. The mixture is then washed with ethanol, water and filtered.

The mixture is finally ultrafiltrated/dialyzed using a membrane cutoff of 1000-3000. For specific amounts of reagents, see Table 3 for details.

Sample for NMR analysis is dried in vacuum.

Table 3.

| Sample Code | DS (Kjehldal) | GTAC (mol) | H2O (mol) | NaOH (mol) | Nitrogen content (mg/kg) | DS (NMR) |
|---|---|---|---|---|---|---|
| 1411 | 0.03 | 0.5 | 5.0 | 0.076 | 2700 | |
| 1210 | 0.15 | 1.0 | 5.0 | 0.076 | 12000 | |
| 1310 | 0.25 | 0.5 | 2.5 | 0.038 | 18000 | 0.2 |
| 1611 | 0.98 | 3.0 | 15.0 | 0.300 | 49000 | |
| 1511 | 2.07 | 1.5 | 7.5 | 0.150 | 65000 | |

Table 3 continued.

| Sample Code | Xylan weight (g) | Yield (g) | Ultrafiltration/dialysis Cut off |
|---|---|---|---|
| 1411 | 100 | 75 | 3000 |
| 1210 | 100 | 55 | 3000 |
| 1310 | 60 | 41 | 3000 |
| 1611 | 100 | 55 | 3000 |
| 1511 | 100 | 72 | 3000 |

**Example 2**

Seven samples with varying degree of substitution are prepared from the commercially available non-food polysaccharide, arabinogalactan.

GTAC (Raisacat, Ciba-Basf), H20 and a catalytic amount of NaOH are mixed thoroughly in a reaction flask, and the flask was then instantly added to a pre-warmed water bath at 45 °C. Arabinogalactan and a small additional amount of water are then added to the mixture, and the mixture is stirred thoroughly for 16 hours at constant temperature. The mixture is then washed with ethanol, water and filtered.

The mixture is finally ultrafiltrated/dialyzed using a membrane cutoff of 1000-3000. For specific amounts of reagents, see Table 4 for details.

Table 4.

| Sample Code | DS | GTAC (mol) | H2O (mol) | NaOH (mol) | Nitrogen content (mg/kg |
|---|---|---|---|---|---|
| 210 | 0.1 | 1.0 | 0.1 | 0.076 | 7200 |
| 711 | 0.25 | 0.5 | 5.0 | 0.076 | 21000 |
| 611 | 0.34 | 0.75 | 5.0 | 0.076 | 26000 |
| 511 | 0.5 | 1.25 | 5.0 | 0.076 | 34000 |
| 110 | 0.75 | 1.0 | 5.0 | 0.076 | 38000 |
| 310 | 0.94 | 2.0 | 10.0 | 0.150 | 48000 |
| 411 | 1.20 | 2.0 | 10.0 | 0.150 | 50000 |

Table 4 continued

| Sample Code | Arabinogalactan weight (g) | Yield (g) |
|---|---|---|
| 210 | 50 | 39.2 |
| 711 | 50 | 43.4 |
| 611 | 50 | 44.5 |
| 511 | 50 | 57.2 |
| 110 | 50 | 58.3 |
| 310 | 50 | 55.3 |
| 411 | 50 | 53.4 |

**Example 3**

ASA emulsions are prepared using a kitchen blender with 2 min mixing, after which they are passed through a homogenizer at 150 bar pressure.

Firstly, sizing emulsion is prepared from 1.25% ASA emulsions using GTAC cationized xylan from table 1 to ASA ratio of 0.1:1 as stabilizer.

Secondly, sizing emulsion is prepared from 1.25% ASA emulsions using GTAC cationized arabinogalactan

from table 2 to ASA ratio of 0.1:1 as stabilizer.

As a reference sizing emulsion is prepared also from starch (Ralsamyl 50021) and 1.25% ASA emulsion using starch to ASA ratio of 2:1 as stabilizer. Further reference samples are made from 1.25% ASA emulsions using xylan and arabinogalactan without cationization in ratios of 0.1:1 as stabilizers.

## Example 4

Laboratory hand sheets, 80 g/m2, are prepared by introducing into 50/50 hardwood/softwood Kraft pulp furnish having a pH 8.5 the stabilized sizing formulations of example 3. No fillers are used in the resulting paper processing and the wet End starch amount is 5 kg/t.

The stabilized size formulation dosages used are 0.5 kg/t, 0.75 kg/t and 1.25 kg/t for the arabinogalactan stabilized sizes and 0.75 kg/t, 1.5 kg/t and 3 kg/t for the xylan stabilized sizes. K 3400R (200 g/t) is used a retention aid.

The results from Cobb60 testing are depicted in figure 1 for xylan stabilized sizing agent formulation further depicting the reference sample result for starch, and in figure 2 for arabinogalactan stabilized sizing agent formulation.

The smaller the Cobb60 number the better the sizing, i.e. the paper product is more hydrophobic and absorbs less water.

Figure 1 shows that the paper sheets wherein cationized xylan is used are at least as hydrophobic as when sizing with starch based sizing agent. The hydrophobicity is slightly increased when the degree of substitution is enhanced from 0.03 to 0.98.

Figure 2 shows that the paper sheets wherein cationized arabinogalactan is used are slightly less hydrophobic than when sized with starch based sizing agent. The hydrophobicity is increasing when the degree of substitution is increased, the sample with DS=0.94 providing essentially the same Cobb60 value as the starch reference.

## Claims

1. A stabilized sizing formulation, **comprising** a sizing agent and a modified non-food polysaccharide which comprises xylan or arabinogalactan or mixtures thereof and wherein the modified non-food polysaccharide is obtained by modifying the non-food polysaccharide with a cationically charged amino reagent and wherein the ratio of the modified non-food polysaccharide to the sizing agent is from 0.05 to 1 and the degree of substitution of the modified non-food polysaccharide is from 0.03 to 1.5.

2. The formulation according to claim 1, **wherein** the sizing agent is AKD or ASA or a mixture thereof.

3. The formulation according to claim 1 or 2, **wherein** the non-food polysaccharide is xylan or arabinogalactan or mixtures thereof.

4. The formulation according to claim 1, **wherein** the amino reagent is glycidyltrimethylammoniumchloride.

5. The formulation according to any one of the claims 1-4, **wherein** said formulation is in form of a dispersion, preferably an emulsion.

6. A method for preparing the stabilized sizing formulation of claim 1, **characterized in that** the sizing agent and the modified non-food polysaccharide comprising xylan or arabinogalactan or mixtures thereof, wherein the modified non-food polysaccharide is obtained by modifying the non-food polysaccharide with a cationically charged amino reagent and the degree of substitution of the modified non-food polysaccharide is from 0.03 to 1.5, are brought into contact within an aqueous solution whereby a dispersion is formed by homogenization at a pressure from 140 to 160 bar.

7. Use of the stabilized sizing formulation according to any one of the claims 1 to 5 for sizing paper and paper products.

8. Use according to claim 7, **wherein** the dosing of the stabilized sizing formulation into pulp is from 0.5 to 3 kg/t.

9. A method for preparation of the modified non-food polysaccharide of claim 1 comprising functionalizing a polysaccharide by a reaction with a cationically charged amino reagent, **characterized in that** said method comprises the steps of

   i. providing a mixture of charging agent, water and a catalytic amount of base, and stirring said mixture thoroughly

at a temperature above the room temperature, and
ii. introducing said non-food polysaccharide comprising xylan or arabinogalactan or mixtures thereof and a small amount of water to the mixture of step i, and stirring the resulting mixture for several hours at a constant temperature, and subsequently
iii. washing and filtering the resulting cationically charged non-food polysaccharide before recovery.

## Patentansprüche

1. Stabilisierte Schlichteformulierung umfassend ein Schlichtemitttel und ein modifiziertes Nichtlebensmittel-Polysaccharid, welches Xylan oder Arabinogalactan oder Gemische davon umfasst, und wobei das modifizierte Nichtlebensmittel-Polysaccharid durch Modifizieren des Nichtlebensmittel-Polysaccharids mit einem kationisch geladenen Aminoreagens gewonnen ist, und wobei das Verhältnis des modifizierten Nichtlebensmittel-Polysaccharids zu dem Schlichtemittel von 0,05 bis 1 ist und der Substitutionsgrad des modifizierten Nichtlebensmittel-Polysaccharids von 0,03 bis 1,5 ist.

2. Formulierung gemäß Anspruch 1, wobei das Schlichtemitttel AKD oder ASA oder ein Gemisch davon ist.

3. Formulierung gemäß Anspruch 1 oder 2, wobei das Nichtlebensmittel-Polysaccharid Xylan oder Arabinogalactan oder Gemische davon ist.

4. Formulierung gemäß Anspruch 1, wobei das Aminoreagens Glycidyltrimethylammoniumchlorid ist.

5. Formulierung gemäß einem der Ansprüche 1 bis 4, wobei die Formulierung in Form einer Dispersion, vorzugsweise einer Emulsion vorliegt.

6. Verfahren zum Herstellen der stabilisierten Schlichteformulierung nach Anspruch 1, **dadurch gekennzeichnet, dass** das Schlichtemitttel und das modifizierte Nichtlebensmittel-Polysaccharid, das Xylan oder Arabinogalactan oder Gemische davon umfasst, wobei das modifizierte Nichtlebensmittel-Polysaccharid durch Modifizieren des Nichtlebensmittel-Polysaccharids mit einem kationisch geladenen Aminoreagens gewonnen ist und der Substitutionsgrad des modifizierten Nichtlebensmittel-Polysaccharids von 0,03 bis 1,5 ist, mit einer wässrigen Lösung in Kontakt gebracht werden, wodurch eine Dispersion durch Homogenisierung bei einem Druck von 140 bis 160 bar geformt wird.

7. Verwendung der stabilisierten Schlichteformulierung gemäß einem der Ansprüche 1 bis 5 zum Schlichten von Papier und Papierprodukten.

8. Verwendung gemäß Anspruch 7, wobei die Dosierung der stabilisierten Schlichteformulierung in Pulpe von 0,5 bis 3 kg/t ist.

9. Verfahren zur Herstellung des modifizierten Nichtlebensmittel-Polysaccharids nach Anspruch 1, umfassend Funktionalisieren eines Polysaccharids durch eine Reaktion mit einem kationisch geladenen Aminoreagens, **dadurch gekennzeichnet, dass** das Verfahren die Schritte umfasst

i. Bereitstellen eines Gemischs aus Lademittel, Wasser und einer katalytischen Menge einer Base, und gründliches Rühren des Gemischs bei einer Temperatur über der Raumtemperatur, und
ii. Einbringen des Nichtlebensmittel-Polysaccharids, das Xylan oder Arabinogalactan oder Gemische davon umfasst, und einer kleinen Menge Wasser in das Gemisch aus Schritt i, und Rühren des sich ergebenden Gemischs für mehrere Stunden bei einer konstanten Temperatur, und anschließend
iii. Waschen und Filtern des sich ergebenden kationisch geladenen Nichtlebensmittel-Polysaccharids vor Rückgewinnung.

## Revendications

1. Formulation de collage stabilisée, comprenant un agent de collage et un polysaccharide non alimentaire modifié qui comprend du xylane ou de l’arabinogalactane ou des mélanges de ceux-ci et dans laquelle le polysaccharide non alimentaire modifié est obtenu par modification du polysaccharide non alimentaire avec un réactif amino cationiquement chargé et dans laquelle le rapport entre le polysaccharide non alimentaire modifié et l'agent de collage est de 0,05 à 1 et le degré de substitution du polysaccharide non alimentaire modifié est de 0,03 à 1,5.

**2.** Formulation selon la revendication 1, dans laquelle l'agent de collage est l'AKD ou l'ASA ou un mélange de ceux-ci.

**3.** Formulation selon la revendication 1 ou 2, dans laquelle le polysaccharide non alimentaire est le xylane ou l'arabinogalactane ou des mélanges de ceux-ci.

**4.** Formulation selon la revendication 1, dans laquelle le réactif amino est le chlorure de glycidyltriméthylammonium.

**5.** Formulation selon l'une quelconque des revendications 1 à 4, dans laquelle ladite formulation est sous forme d'une dispersion, de préférence d'une émulsion.

**6.** Procédé de préparation de la formulation de collage stabilisée de la revendication 1, **caractérisé en ce que** l'agent de collage et le polysaccharide non alimentaire modifié comprenant du xylane ou de l'arabinogalactane ou des mélanges de ceux-ci, dans lequel le polysaccharide non alimentaire modifié est obtenu par modification du polysaccharide non alimentaire avec un réactif amino cationiquement chargé et le degré de substitution du polysaccharide non alimentaire modifié est de 0,03 à 1,5, sont amenés en contact dans une solution aqueuse moyennant quoi une dispersion est formée par homogénéisation à une pression de 140 à 160 bars.

**7.** Utilisation de la formulation de collage stabilisée selon l'une quelconque des revendications 1 à 5, pour coller du papier et des produits de papier.

**8.** Utilisation selon la revendication 7, dans laquelle le dosage de la formulation de collage stabilisée dans une pâte est de 0,5 à 3 kg/t

**9.** Procédé de préparation du polysaccharide non alimentaire modifié de la revendication 1, comprenant la fonctionnalisation d'un polysaccharide par une réaction avec un réactif amino cationiquement chargé, **caractérisé en ce que** ledit procédé comprend les étapes de

i. fourniture d'un mélange d'un agent de charge, d'eau et d'une quantité de base catalytique, et brassage minutieux dudit mélange à une température supérieure à la température ambiante, et
ii. introduction dudit polysaccharide non alimentaire comprenant du xylane ou de l'arabinogalactane ou des mélanges de ceux-ci et d'une petite quantité d'eau dans le mélange de l'étape i, et brassage du mélange résultant pendant plusieurs heures à une température constante, et ensuite
iii. lavage et filtration du polysaccharide non alimentaire cationiquement chargé résultant avant récupération.

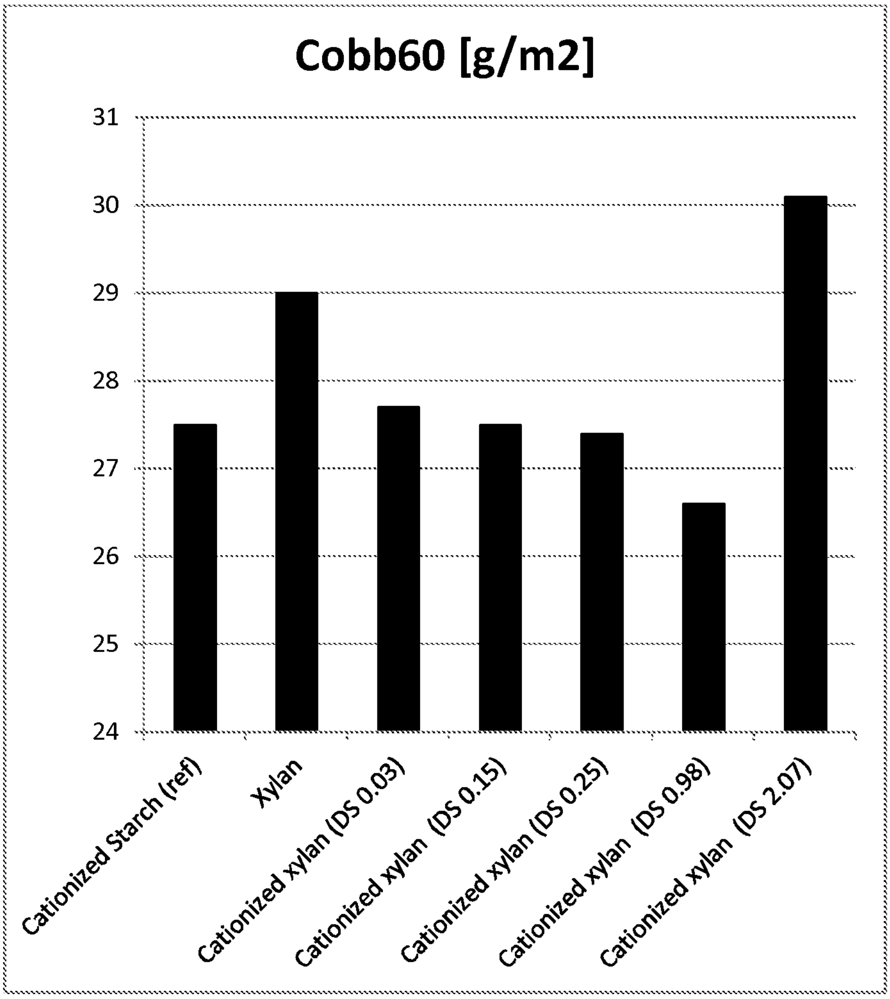
Cobb60 [g/m2]
31
30
29
28
27
26
25
24
Cationized Starch (ref)
Xylan
Cationized xylan (DS 0.03)
Cationized xylan (DS 0.15)
Cationized xylan (DS 0.25)
Cationized xylan (DS 0.98)
Cationized xylan (DS 2.07)

Figure 1

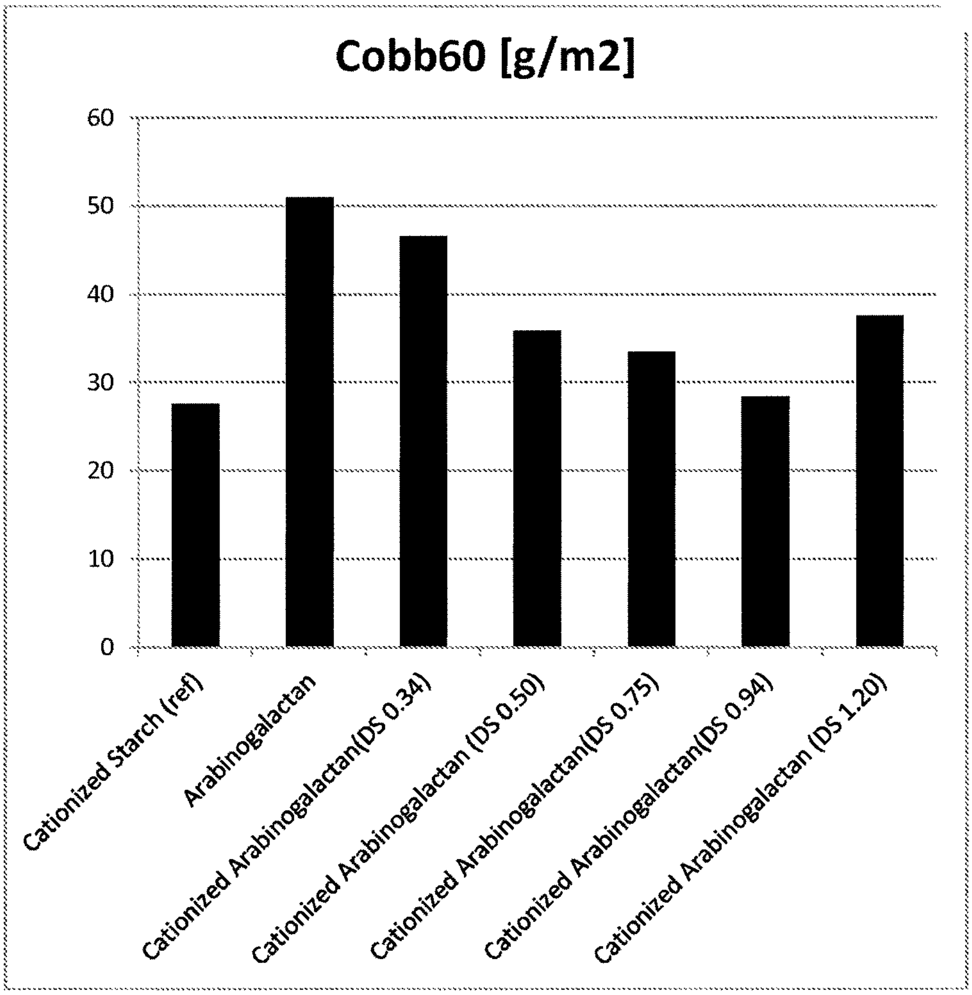
Cobb60 [g/m2]
60
50
40
30
20
10
0
Cationized Starch (ref)
Arabinogalactan
Cationized Arabinogalactan(DS 0.34)
Cationized Arabinogalactan (DS 0.50)
Cationized Arabinogalactan(DS 0.75)
Cationized Arabinogalactan(DS 0.94)
Cationized Arabinogalactan (DS 1.20)

Figure 2.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 4606773 A
- WO 2008145828 A1